# EUROPEAN PATENT APPLICATION

(11) **EP 4 546 699 A1**
(43) Date of publication of application: **30.04.2025**
(21) Application number: 23850294.2
(22) Date of filing: 18.07.2023
(51) Int. Cl.: H04L 5/14, H04L 5/00, H04W 72/04, H04L 27/26

(54) **METHOD AND DEVICE FOR SETTING SUBBAND FOR FULL DUPLEX COMMUNICATION IN WIRELESS COMMUNICATION SYSTEM**

(30) Priority: 02.08.2022 KR 20220096328; 23.06.2023 KR 20230081035
(71) Applicant: KT Corporation, Seongnam-si, Gyeonggi-do 13606 (KR)
(72) Inventor: PARK, Kyujin, Seongnam-si Gyeonggi-do 13606 (KR)
(74) Representative: BCKIP Part mbB
(86) International application number: PCT/KR2023/010277
(87) International publication number: WO 2024/029787

(57) **Abstract**

Disclosed are a method and apparatus for performing downlink transmission and reception and uplink transmission and reception in a wireless communication system. Subband configuration information for full duplex communication is transmitted from a base station to a UE. The UE performs the downlink reception or the uplink transmission through a subband based on the received subband configuration information, wherein the subband configuration information includes frequency resource configuration information and time resource configuration information, a frequency resource of the subband configured based on the frequency resource configuration information is configured based on a common resource block (CRB), and a time resource of the subband configured based on the time resource configuration information is configured based on at least one subband pattern having a period.

## Description

### Technical Field

The present disclosure relates to a 3GPP 5G NR system.

### Background Art

As more communication devices require greater communication traffic, necessity for a next generation 5G system, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user experienced data rate, high peak data rate, and the like. URLLC corresponds to a next generation mobile communication scenario having characteristics such as ultra-reliable, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

The disclosure of the present specification is to provide a method and apparatus for a base station and a terminal to perform downlink transmission and reception and/or uplink transmission and reception through a subband for full duplex communication in a wireless communication system.

### Solution to Problem

An embodiment of the present specification provides a method for a UE in a wireless communication system to receive subband configuration information for full duplex communication; and perform downlink reception or uplink transmission through a subband based on the received subband configuration information, wherein, the subband configuration information includes frequency resource configuration information and time resource configuration information, a frequency resource of the subband configured based on the frequency resource configuration information is configured based on a common resource block (CRB), and a time resource of the subband configured based on the time resource configuration information is configured based on at least one subband pattern having a period.

Further, an embodiment of the disclosure provides a method for a base station in a wireless communication system to transmit subband configuration information for full duplex communication; and perform downlink transmission or uplink reception through a subband based on the transmitted subband configuration information, wherein the subband configuration information includes frequency resource configuration information and time resource configuration information, a frequency resource of the subband configured based on the frequency resource configuration information is configured based on a common resource block (CRB), and a time resource of the subband configured based on the time resource configuration information is configured based on at least one subband pattern having a period.

Further, an embodiment of the disclosure provides a communication apparatus in a wireless communication system, the apparatus including: at least one processor; and at least one memory configured to store instructions and be operably electrically connectable to the at least one processor, wherein operations performed based on the instructions executed by the at least one processor include receiving subband configuration information for full duplex communication; and performing downlink reception or uplink transmission through a subband based on the received subband configuration information, wherein the subband configuration information includes frequency resource configuration information and time resource configuration information, a frequency resource of the subband configured based on the frequency resource configuration information is configured based on a common resource block (CRB), and a time resource of the subband configured based on the time resource configuration information is configured based on at least one subband pattern having a period.

Further, an embodiment of the disclosure provides a base station in a wireless communication system, the base station including: at least one processor; and at least one memory configured to store instructions and be operably electrically connectable to the at least one processor, wherein operations performed based on the instructions executed by the at least one processor include transmitting subband configuration information for full duplex communication; and performing downlink transmission or uplink reception through a subband based on the transmitted subband configuration information, wherein the subband configuration information includes frequency resource configuration information and time resource configuration information, a frequency resource of the subband configured based on the frequency resource configuration information is configured based on a common resource block (CRB), and a time resource of the subband configured based on the time resource configuration information is configured based on at least one subband pattern having a period.

The subband configuration information may further includee subcarrier spacing (SCS) information and cyclic prefix information.

The frequency resource of the subband may be configured based on i) upper edge, center or lower edge frequency location information and resource block (RB) number information, ii) starting RB information and RB number information, or iii) starting RB information and ending RB information. Alternatively, the frequency resource of the subband may be configured based on a starting resource block (RB) and a resource indication value (RIV) from which the number of RBs is derived.

The number of at least one subband pattern and the period of each subband pattern are based on information corresponding to time division duplex (TDD) uplink (UL)-downlink (DL) configuration common (tdd-UL-DL-ConfigurationCommon) information element.

Meanwhile, the time resource of the subband may be configured based on duration based on the number of symbols, from a specific symbol of each subband pattern.

The subband configuration information may further include a subband list including the subband, and at least one subband included in the subband list may be activated.

The subband configuration information may be received through UE-specific or cell-specific upper layer signaling, and the subband may be activated through downlink control information (DCI).

Alternatively, the subband configuration information may be received through downlink control information (DCI).

Meanwhile, the configuration of the subband may be released through the UE-specific or cell-specific upper layer signaling.

### Advantageous Effects of Invention

According to the embodiments, downlink transmission and reception and/or uplink transmission and reception are efficiently performed through a subband for full duplex communication in a wireless communication system.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIGS. 7A and 7B show schematic examples of subband full duplex communication.
FIG. 8 shows an example of slot configuration for subband full duplex communication according to an embodiment of the present specification.
FIG. 9 shows another example of slot configuration for suband full duplex communication according to an embodiment of the present specification.
FIG. 10 shows a method of operating a terminal according to an embodiment of the present specification.
FIG. 11 shows a method of operating a base station according to an embodiment of the present specification.
FIG. 12 shows apparatuses according to an embodiment of the disclosure.
FIG. 13 is a block diagram showing a configuration of a terminal according to an embodiment of the disclosure.
FIG. 14 is a configuration block diagram of a processor in which the disclosure is implemented.
FIG. 15 is a detailed block diagram of a transceiver of a first apparatus shown in FIG. 12 or a transceiving unit of an apparatus shown in FIG. 13.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

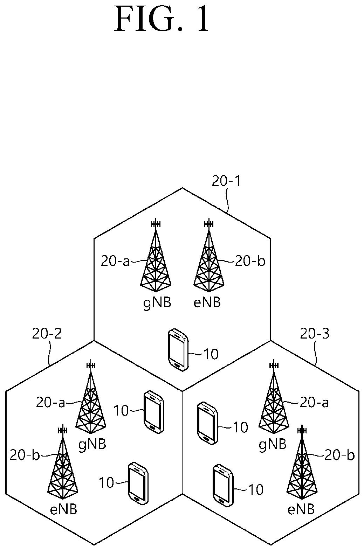

**FIG. 1** **illustrates a wireless communication system.**

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

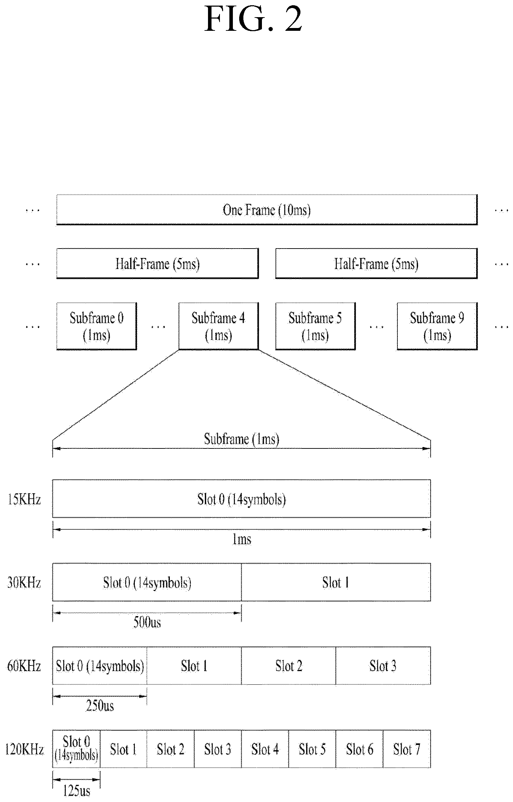

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**Table 3**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

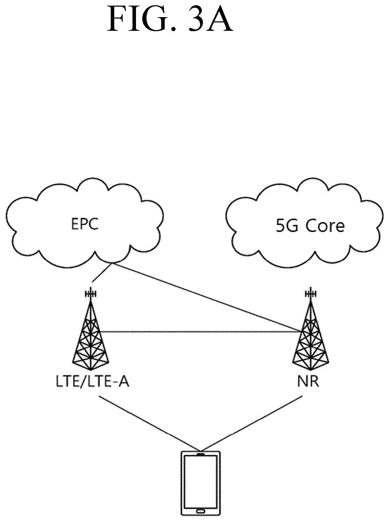

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

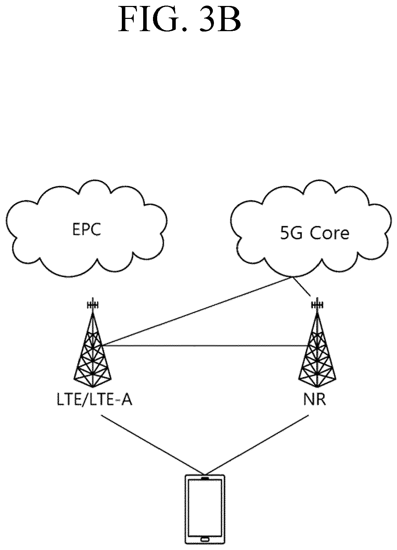

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

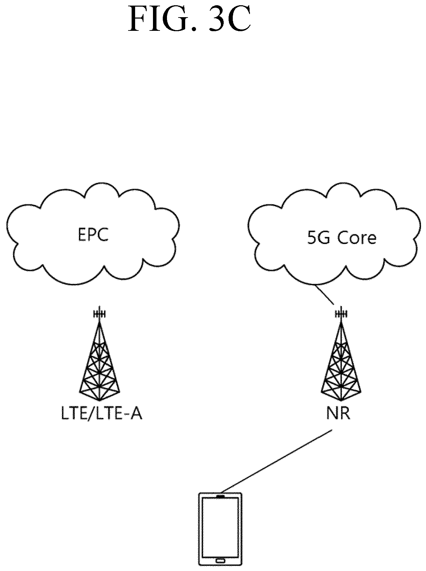

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

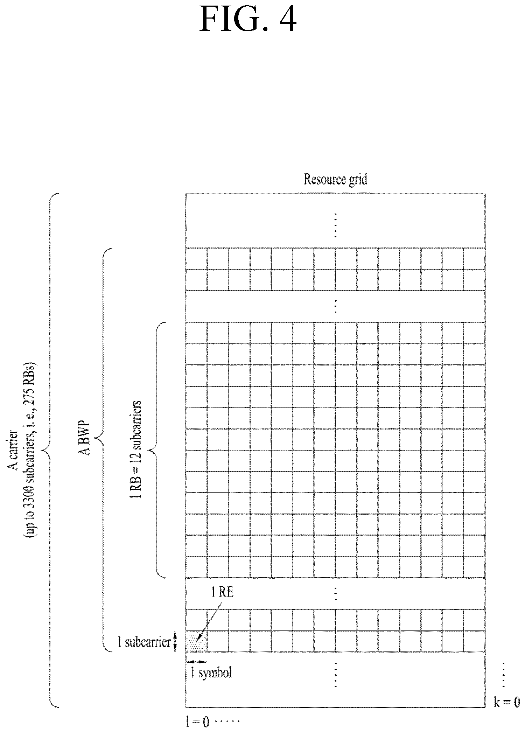

**FIG. 4** **illustrates a slot structure of an NR frame.**

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

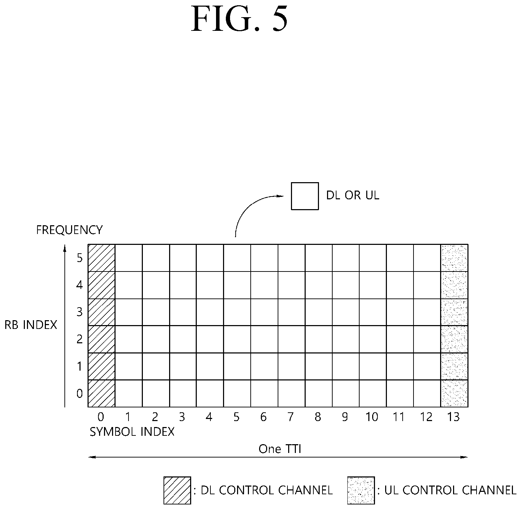

**FIG. 5** **shows an example of a subframe type in NR.**

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

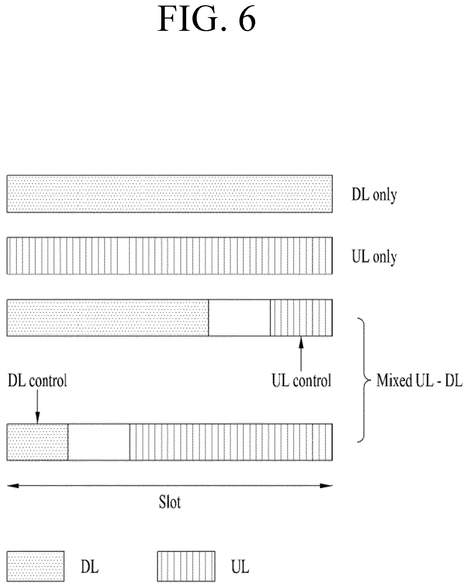

**FIG. 6** **illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Disclosures of the present specification>

Time division duplex (TDD) refers to a duplexing method widely used in commercial NR, i.e., a 5G mobile communication system. In TDD, time-segment radio resources are divided into downlink slots and uplink slots, where the downlink slots are typically distributed in a higher percentage than the uplink slots according to the distribution ratio of uplink traffic and downlink traffic. However, such a limitation of the uplink slot distribution has negative effects in terms of coverage and delay time. Recently, full duplex communication has recently attracted attention as a technology to solve such a problem.

The full duplex communication refers to technology in which the gNB, i.e., the base station performs DL transmission and UL reception simultaneously through the same (or given) radio resources. The UE may also perform DL reception and UL transmission simultaneously. In other words, both the base station and the UE may support full duplex communication. However, unlike the base station in which self-interference cancelation is structurally easy, the UE has DL reception performance susceptible to self-interference from a UL transmission signal. Therefore, it is generally considered preferable to operate the gNB in full duplex communication and operate the UE in half duplex communication. In addition, the gNB may also primarily consider a subband non-overlapping full duplex method in which it performs DL transmission and UL reception simultaneously, but uses different frequency resources for transmission and reception, rather than the same resources between the DL and UL to reduce the effects of self-interference.

As described above, various full duplex application scenarios are taken into account based on the capabilities of the base station and the UE, the frequency bands, frequency interference issues with other companies, etc.

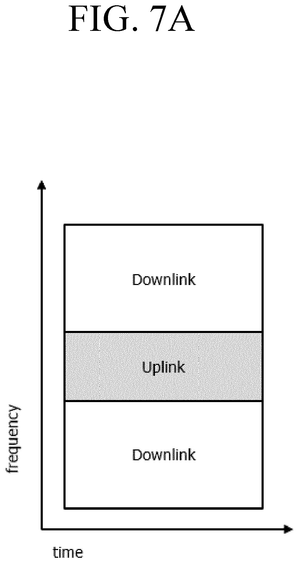

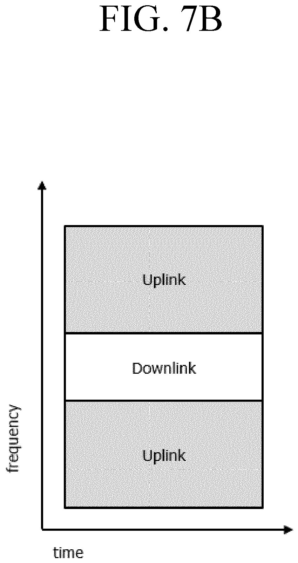

**FIGS. 7A** **and** **7B** **show schematic examples of subband full duplex communication.**

The wireless communication system using OFDM may employ a duplexing method referred to as subband full duplex communication (SBFD). Here, the subband full duplex communication may be referred to as subband full duplex communication (SBFD) or full duplex communication subband (FDSB). Although the terms SBFD and FDSB are interchangeably used in the present specification, they may have substantially the same meaning.

In SBFD, some time-frequency resources on a given carrier are used for the downlink, and some time-frequency resources on the same carrier are used for the uplink. Specifically, the downlink resources and the uplink resources are separated from each other in the frequency domain and used for transmission and reception.

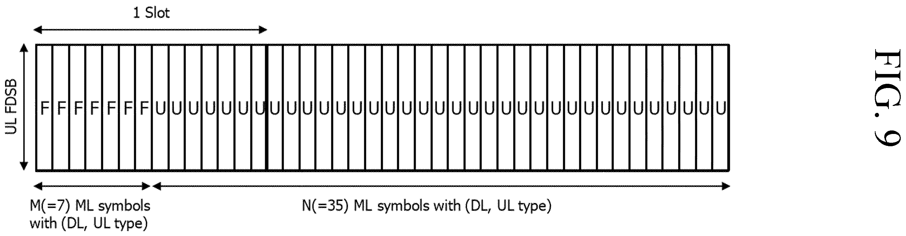

FIGS. 7A and 7B show examples of SBFD. In the frequency domain, FIG. 7A shows an example where an uplink subband is located between downlink subbands, and FIG. 9B shows an example where the downlink subband is located between the uplink subbands. Although not shown in the drawings, a guard band or guard period may be located between the downlink subband and the uplink subband to reduce interference.

The disclosure introduces a subband-based LTL-DL slot configuration method for supporting subband non-overlapping full duplex communication in a gNB. However, the same method may be applied equally in various full duplex communication application scenarios. For example, the method may include full duplex operations in an unpaired spectrum and full duplex operations in a DL frequency band or UL frequency band of a paired spectrum. Further, as described above, the method may be applied to a scenario where only the gNB supports the sub-band non-overlapping full duplex communication or pure full duplex communication (i.e., simultaneous DL transmission and UL reception on the same frequency resource) and the UE performs the half duplex operations. Additionally, the method according to an embodiment may be equally applicable when both the gNB and the UE supports the sub-band non-overlapping full duplex communication or pure full duplex communication.

When the base station supports the subband non-overlapping-based full duplex communication, a UL-DL configuration is required to use frequency resources of a specific sub-band in any unpaired spectrum as DL symbols for the DL transmission, and frequency resources of another sub-band are used as UL symbols for the UL reception. However, the current UL-DL slot configuration in NR is defined to be performed in units of cells through cell-specific radio resource control (RRC) signaling. In other words, the patterns of certain periodic DL symbols, UL symbols and flexible symbols are configured through an RRC message of '*tdd-UL-DL-ConfigurationCommon*' for that UL-DL slot configuration. In addition, only the flexible symbols configured through the foregoing '*tdd-UL-DL-ConfigurationCommon*' may be reallocated to the UL symbols, DL symbols or flexible symbols for each UE through UE-specific RRC signaling of '*tdd-UL-DL-ConfigurationDedicated.*' Further, a dynamic slot format indication method using a UE-group common PDCCH is also defined in NR. To this end, NR also supports the dynamic slot format indication method through the DCI format 2_0.

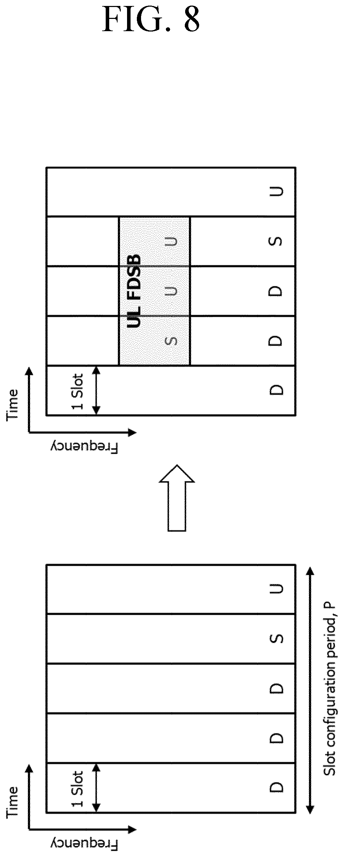

**FIG. 8** **shows an example of slot configuration for subband full duplex communication according to an embodiment of the present specification.**

According to the foregoing existing slot configuration method, any symbol may be configured or indicated as one of the DL, UL or flexible symbol.

Referring to FIG. 8, the left in FIG. 8 shows an example that any slot format is configured as DDDSU through the existing slot configuration. Here, D refers to a downlink slot, which means that all the OFDM symbols making up the corresponding slot are configured as DL. U refers to an uplink slot, which means that all the OFDM symbols making up the corresponding slot are configured as UL. S refers to a special slot, which means a slot that includes the flexible symbol for DL/UL transition. Generally, the special slot in the case of normal CP may have a total of 14 symbols including 12 DL symbols and 2 flexible symbols. Alternatively, the special slot may include 10 DL symbols, 2 flexible symbols, and 2 UL symbols. In other words, one symbol within any one TDD carrier is configured or indicated only as one of the DL, UL or flexible symbol.

However, as shown on the right in FIG. 8, any frequency resource, i.e., a subband, for supporting a transmission (Tx) direction in a different direction from the transmission direction configuration (i.e., DL, UL, or flexible) configured by slot configuration information may be supported to support full duplex operations. In other words, as shown on the right in FIG. 8, some frequency resources in any DL slot or DL symbol may be defined to be used as flexible symbols for UL transmission or DL/UL transition of the terminal. Alternatively, some frequency resources in any UL slot or UL symbol may be defined to be used for DL transmission of the base station. In this way, this specification proposes specific methods of configuring and operating a UL Full duplex subband (FDSB) in any DL slot/symbol or a DL FDSB in the UL slot/symbol.

### I. First disclosure: Semi-static configuration

Any FDSB may be configured semi-statically through cell-specific or UE-specific radio resource control (RRC) signaling. In this case, the corresponding FDSB configuration information may include subband type information (DL SBFD or UL SBFD), frequency resource assignment information of the corresponding FDSB, subcarrier spacing (SCS) information, cyclic prefix (CP) information, time-segment resource assignment information of the corresponding FDSB, etc.

As a method of assigning the frequency resource of the FDSB, it may be defined to include the FDSB's frequency location information and the FDSB's bandwidth (BW) information. The frequency location information may refer to location information where the FDSB is configured within a system bandwidth of a certain TDD carrier, and this location information may for example be defined to be referred to as one among three types such as the upper edge, the lower edge and the center of the system bandwidth. In addition, the BW information of the FDSB includes the number of resource blocks (RBs) allocated from the upper edge or the lower edge to the FDSB, in which the RB may be defined so that the number of RBs can be configured based on a common resource block (CRB) or the number of RBs can be configured based on a physical resource block (PRB) of an initial DL bandwidth part (BWP). Likewise, when the number of RBs is configured to have a value of N in the BW information of the FDSB even in the case of configuring the FDSB at a center frequency (i.e., the center of the system bandwidth), an upper bandwidth of N/2 and a lower bandwidth of N/2 of the FDSB may be defined to be vertically symmetrical to each other with respect to the center frequency. Alternatively, the corresponding value of N may be defined to mean each value of the upper bandwidth and the lower bandwidth, thereby defining the bandwidth of the FDSB to be 2N at the center frequency.

As another method of configuring the frequency resource of the FDSB, a starting RB and the number of consecutive RBs in which the FDSB is configured from the starting RB may be defined. In this case, the starting RB is a CRB, and N_{FDSB}^{start} = O_{carrier} + RBₛₜₐᵣₜ, where O_{carrier} is given by a carrier offset for the SCS (offsetToCarrier for the subcarrierSpacing). Here, the starting RB RBₛₜₐᵣₜ, the number of contiguous RBs, and N_{FDSB}^{size}=L_{RB} may be configured through resource indication vector/value (RIV) configurations, or the corresponding values may be defined to be configured through separate information areas, respectively. Alternatively, RB indices corresponding to the start and end points of the subband may be configured and transmitted.

The time-segment resource configuration information of the FDSB may include period information, offset information, duration information, slot format information, etc. for each FDSB pattern. Specifically, the FDSB may be configured to have one or two time-segment patterns, and period information, offset information (an FDSB start symbol or FDSB last symbol within the period), duration information (the length of FDSB), and slot format information (i.e., configuration information such as a UL symbol, a DL symbol, a flexible symbol, etc.) within the corresponding duration may be configured for each pattern. The corresponding configuration information may be configured as separate information areas and defined to configure respective parameters in the base station/network. As another method, specific information may be defined to be implicitly set by different configuration parameters. For example, some values of the FDSB may be defined to be set according to slot configuration information configured by 'td-UL-DL-ConfigurationCommon' and additionally 'td-UL-DL-Configuration Dedicated'. Specifically, the number of patterns of the corresponding FDSB and the period value for each pattern may be varied depending on the number of slot configuration patterns and the period value for each pattern configured by the foregoing 'td-UL-DL-ConfigurationCommon' for the slot configuration. In other words, it may be defined to configure one pattern for the FDSB when one slot configuration pattern is configured by 'td-UL-DL-Configuration Common', and configure two patterns for the FDSB when two slot configuration patterns are configured by 'td-UL-DL-Configuration Common'. In this case, the period information of the FDSB may also be defined to be derived based on the slot configuration information configured through 'td-UL-DL-Configuration Common'. For example, the period information of the FDSB may be defined to have the same value as the slot configuration period information based on the corresponding 'td-UL-DL-Configuration Common'. For example, when one slot configuration pattern is configured through 'td-UL-DL-Configuration Common', and the corresponding slot configuration pattern has a period of P, any FDSB may also be defined to configure one pattern based on the period of P. On the other hand, when two slot configuration patterns (pattern 1 based on the period of P and pattern 2 based on a period of P2) are configured in the period of P+P2 through 'tdd-UL-DL-Configuration Common', the corresponding FDSB may also be defined to be configured with the pattern1 (based on the period of P) and the pattern2 (based on the period P2) in the period of P+P2.

**FIG. 9** **shows another example of slot configuration for subband full duplex communication according to an embodiment of the present specification.**

The slot format of the FDSB may be restricted to have a certain format depending on the types of FDSB. For example, when a UL FDSB is configured within a DL symbol (or additionally a flexible symbol), the UL FDSB may be defined to have a format of consecutive flexible symbols + consecutive UL symbols. On the other hand, when a DL FDSB is configured within a UL symbol, the DL FDSB may be defined to include only the DL symbols.

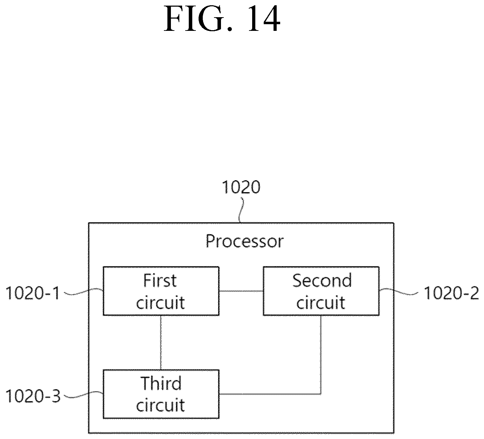

Further, an offset value may also be fixed to a specific location according to the types of FDSB. For example, when the UL FDSB is configured as shown above in FIG. 8, the location of the last symbol where the corresponding UL FDSB is configured within each UL FDSB pattern may be fixed to the preceding symbol of the last DL symbol, the last flexible symbol, or the first UL symbol configured by 'tdd-UL-DL-ConfigurationCommon'. Accordingly, UL FDSB duration within the corresponding pattern may be configured by the number of consecutive symbols that make up the corresponding FDSB in a symbol index reverse direction from an offset symbol (i.e., the last symbol of the UL FDSB). Alternatively, it may be defined to configure the number of consecutive UL symbols constituting the corresponding UL FDSB in the reverse direction of the corresponding last symbol (e.g., the number of consecutive UL symbols is 35 when the UL FDSB is configured as shown in FIG. 9), and the number of flexible symbols constituting the corresponding UL FDSB (e.g., the number of flexible symbols is 7 when the UL FDSB is configured as shown in FIG. 9) without configuring separate duration. On the other hand, it may be defined to configure the offset value, and derive the duration or the slot format information of the corresponding FDSB. For example, when the UL FDSB is configured as shown above in FIG. 8, it may be defined to configure offset information from the start point of a corresponding pattern period to the first symbol where the UL FDSB starts (e.g., in FIG. 8, 14 - when an offset size is configured, or 15 - when which symbol the corresponding UL FDSB starts is configured), configure the number of consecutive flexible symbols (7, in FIG. 9) from the corresponding start offset symbol, and it may be defined based on this to use even the preceding symbols of the last DL symbol, the last flexible symbol or the first UL symbol configured by 'tdd-UL-DL-ConfigurationCommon' as the UL symbols for the corresponding UL FDSB. However, the foregoing example shows the method of when the UL FDSB is configured in the order of flexible + UL symbols. If the UL FDSB is configured in different ways, for example, if the UL FDSB is entirely configured with the UL symbols, the information area for configuring the flexible symbols in the foregoing example may be omitted.

In the same manner, when the DL FDSB is configured within the UL symbols configured by 'tdd-UL-DL-ConfigurationCommon', the location of the last symbol where the corresponding DL FDSB is configured within each DL FDSB pattern may be fixed to the preceding symbol of the last UL symbol or the first DL symbol configured by 'tdd-UL-DL-ConfigurationCommon'. Accordingly, the number of consecutive symbols making up the corresponding DL FDSB in a symbol index reverse direction from an offset symbol (i.e., the last symbol of the DL FDSB), i.e., the number of symbols used as DL within the corresponding DL FDSB may be defined to be configured as DL FDSB duration and slot format information within the corresponding pattern. On the other hand, it may be defined to configure the offset value may be configured, and derive the duration or slot format information of the corresponding FDSB. For example, it may be defined to configure only offset information from the first UL symbol of the corresponding pattern period to the first symbol where the DL FDSB starts, and in this case, it may be defined to configure the corresponding DL FDSB from the start symbol to the last UL symbol of the configured DL FDSB.

As described above, when any FDSB is semi-statically configured through cell-specific or UE-specific RRC signaling, it may be restricted to configure only one FDSB for each corresponding FDSB type. In other words, it may be restricted to configure only one UL FDSB and one DL FDSB, and it may be defined to release any configured FDSB through the corresponding RRC signaling.

Alternatively, when any FDSB is semi-statically configured through the cell-specific or UE-specific RRC signaling, any base station/cell may configure one or more FDSBs on any TDD carrier through the corresponding FDSB configuration/reconfiguration RRC message, and may also transmit release information or modification for the configured FDSB through the corresponding RRC message. When one or more FDSBs are configured on any TDD carrier, ID information for each FDSB may be configured together to identify each FDSB.

### II. Second Disclosure: Dynamic indication

FDSB configuration information may be defined to be dynamically indicated by the base station through the PDCCH. To this end, a new DCI format may be defined for the corresponding FDSB configuration. The DCI format for the FDSB may include the information areas described in the foregoing method of the first disclosure to indicate the types of FDSB and the frequency and time resources. In this case, the corresponding frequency resource assignment information may be indicated according to the frequency resource configuration method of the FDSB proposed by the foregoing method of the first disclosure based on the CRB of the system bandwidth of the corresponding TDD carrier regardless of the DL BWP configuration or UL BWP configuration information of the UE that receives the corresponding DCI. Alternatively, it may be defined to perform frequency domain resource assignment (FDRA) based on the PRB of the DL BWP activated for the UE in the case of the UL FDSB, and perform the FDRA based on the PRB of the UL BWP activated for the corresponding UE in the case of the DL FDSB. The method of indicating FDSB time resources based on the DCI format for FDSB indication may also be based on the foregoing method proposed by the first disclosure. Alternatively, it may be defined to perform one-off time-segment resource assignment of the FDSB within the corresponding period based on a monitoring period for the DCI format for the corresponding FDSB indication. For example, a slot format including FDSB symbols may be defined, and a slot format table is configured based on the slot format, thereby configuring a slot format combination based on a slot format table for the slots within the corresponding monitoring period, and defining a slot format combination ID to be indicated through the FDSB indication DCI format. Alternatively, it may be defined to indicate a time domain resource assignment (TDRA) index in the corresponding list, by configuring a single slot based 'timedomainresourceallocation list' or a multi-slot based 'timedomainresourceallocation list' for the TDRA for the time resource assignment of the FDSB.

Alternatively, some of the information areas for the FDSB configuration may be configured through the cell-specific or UE-specific RRC signaling as in the foregoing method of the first disclosure, and only some other information may be dynamically indicated based on the DCI. For example, frequency domain resource assignment information for any FDSB is configured by the cell-specific or UE-specific RRC signaling, and only the TDRA information of the corresponding FDSB is dynamically indicated through the DCI.

The DCI for the FDSB configuration described above may be transmitted by the UE-group common or cell-specific signaling, or may be transmitted by the UE-specific signaling. The UE receives reception configuration information for the DCI format for the corresponding FDSB configuration by the base station through the UE-specific or cell-specific RRC signaling. The reception configuration information for the FDSB configuration indication DCI format may include the corresponding DCI monitoring period information, radio network temporary identifier (RNTI) information, payload size information, etc.

Further, the DCI format for the corresponding FDSB indication may be defined to transmit indication information about one or more FDSB configurations within the monitoring period of the corresponding DCI format. When one or more FDSB configurations are supported, the number of FDSBs or the maximum number of FDSBs indicatable through the DCI format for the corresponding FDSB indication may be configured by the base station and transmitted to the UE through the cell-specific or UE-specific RRC signaling, and thus the payload of the DCI format for the corresponding FDSB indication may be configured. Alternatively, the payload size of the DCI format for the corresponding FDSB indication may be directly configured and transmitted from the base station to the UE through the cell-specific or UE-specific RRC signaling.

### III. Third disclosure: FDSB activation/deactivation

One or more pieces of FDSB list configuration information are transmitted through the RRC signaling. The FDSB list configuration information may include one or more pieces of FDSB configuration information, and each piece of FDSB configuration information may be associated with the FDSB ID information. In addition, the configuration information of each FDSB may be configured based on the foregoing semi-static configuration of the first disclosure.

In this way, when an FDSB list of one or more FDSBs is configured in any cell/base station through the RRC signaling, the corresponding base station/call may activate or deactivate a specific FDSB through UE-specific or UE-group common DCI or MAC CE signaling. When any FDSB is activated, the corresponding FDSB may be explicitly deactivated by the base station, or may be defined to be deactivated when a deactivation timer defined for the FDSB expires. Here, when the deactivation timer of the FDSB is defined, a corresponding timer value may have an invariable value or may be configured by the base station/network through the UE-specific or cell-specific RRC signaling. When the corresponding timer value is defined, the time value may be configured to have a common value for all FDSB configurations in the corresponding cell or have a separate value for each FDSB.

Meanwhile, cases where the FDSB configurations are based on all combinations of the first, second and third disclosures described above may also fall into the scope of this specification. Although the disclosure has been described based on the 5G NR system, all cases to which the concept of the disclosure is applied may fall into the scope of this specification, regardless of specific wireless communication technologies.

### <Embodiments of the present specification>

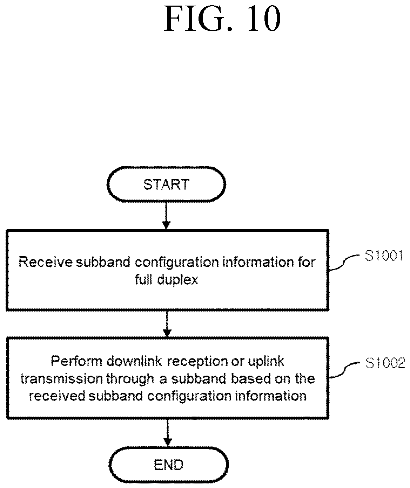

**FIG. 10** **shows a method of operating a terminal according to an embodiment of the present specification.**

Referring to FIG. 10, a terminal receives subband configuration information for full duplex communication from a base station (S1001). The subband configuration information includes frequency resource configuration information and time resource configuration information, in which the frequency resource of a subband configured based on the received frequency resource configuration information is configured based on a common resource block (CRB), and the time resource of the subband configured based on the received time resource configuration information is configured based on at least one subband pattern having a period. Here, the subband configuration information may be received through upper layer signaling or may be received through downlink control information (DCI). The upper layer signaling may be UE-specific RRC signaling or cell-specific RRC signaling.

Then, downlink reception or uplink transmission is performed through the subband based on the received subband configuration information (S1002).

The subband configuration information may further include subcarrier spacing (SCS) information and cyclic prefix information, and may further include a subband list including the subband. Here, at least one subband included in the subband list may be activated.

The frequency resource of the subband may be configured based on i) upper edge, center or lower edge frequency location information and resource block (RB) number information, ii) starting RB information and RB number information, or iii) starting RB information and ending RB information. Alternatively, the frequency resource of the subband may be configured based on a starting resource block (RB) and a resource indication value (RIV) from which the number of RBs is derived.

The number of at least one subband pattern and the period of each subband pattern may be based on information corresponding to time division duplex (TDD) uplink (UL)-downlink (DL) configuration common (tdd-UL-DL-ConfigurationCommon) information element.

Meanwhile, the time resource of the subband may be configured based on duration based on the number of symbols, from a specific symbol of each subband pattern.

When the subband configuration information is received through UE-specific or cell-specific upper layer signaling, the subband may be activated through downlink control information (DCI).

Meanwhile, the configuration of the subband may be released through the UE-specific or cell-specific upper layer signaling.

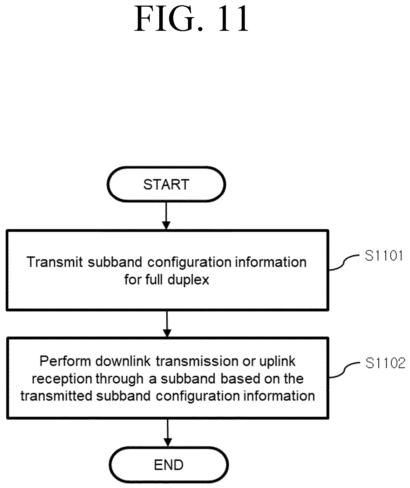

**FIG. 11** **shows a method of operating a base station according to an embodiment of the present specification.**

Referring to FIG. 11, a base station transmits subband configuration information for full duplex communication to a terminal (S1101). The subband configuration information includes frequency resource configuration information and time resource configuration information, in which the frequency resource of a subband configured based on the transmitted frequency resource configuration information is configured based on a common resource block (CRB), and the time resource of the subband configured based on the transmitted time resource configuration information is configured based on at least one subband pattern having a period. Heere, the subband configuration information may be transmitted through upper layer signaling or may be transmitted through downlink control information (DCI). The upper layer signaling may be UE-specific RRC signaling or cell-specific RRC signaling

Then, downlink transmission or uplink reception is performed through the subband based on the transmitted subband configuration information (S1102).

The subband configuration information may further include subcarrier spacing (SCS) information and cyclic prefix information, and may further include a subband list including the subband. Here, at least one subband included in the subband list may be activated.

The frequency resource of the subband may be configured based on i) upper edge, center or lower edge frequency location information and resource block (RB) number information, ii) starting RB information and RB number information, or iii) starting RB information and ending RB information. Alternatively, the frequency resource of the subband may be configured based on a starting resource block (RB) and a resource indication value (RIV) from which the number of RBs is derived.

The number of at least one subband pattern and the period of each subband pattern may be based on information corresponding to time division duplex (TDD) uplink (UL)-downlink (DL) configuration common (tdd-UL-DL-ConfigurationCommon) information element.

Meanwhile, the time resource of the subband may be configured based on duration based on the number of symbols, from a specific symbol of each subband pattern.

When the subband configuration information is received through UE-specific or cell-specific upper layer signaling, the subband may be activated through downlink control information (DCI).

Meanwhile, the configuration of the subband may be released through the UE-specific or cell-specific upper layer signaling.

### <Apparatuses to which the Disclosure is applicable>

The embodiments described up to now may be implemented through various means. For example, the embodiments may be implemented by hardware, firmware, software, or a combination thereof. Details will be described with reference to the accompanying drawings.

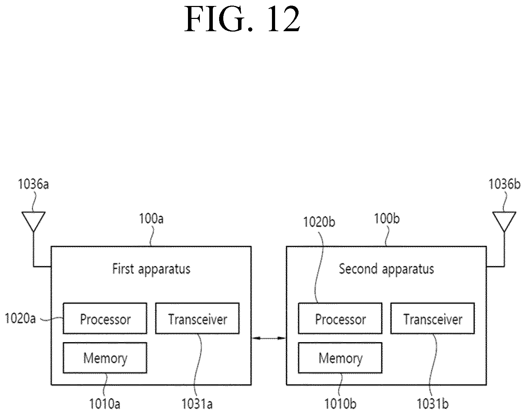

**FIG. 12** **shows apparatuses according to an embodiment of the disclosure.**

Referring to FIG. 12, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

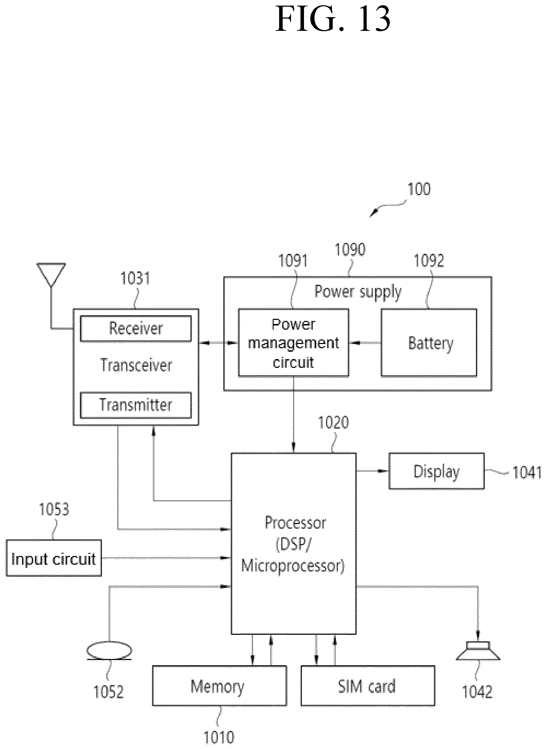

**FIG. 13** **is a block diagram showing a configuration of a terminal according to an embodiment of the disclosure.**

In particular, FIG. 13 illustrates the foregoing apparatus of FIG. 12 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 14** **is a configuration block diagram of a processor in which the disclosure is implemented.**

Referring to FIG. 14, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

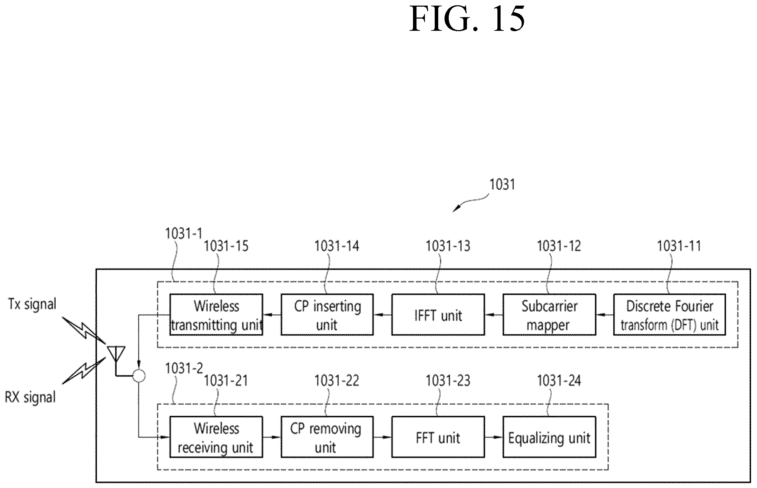

**FIG. 15** **is a detailed block diagram of a transceiver of a first apparatus shown in** **FIG. 12** **or a transceiving unit of an apparatus shown in** **FIG. 13****.**

Referring to FIG. 15, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for a terminal to perform downlink reception and/or uplink transmission in a wireless communication system, the method comprising:
receiving subband configuration information for full duplex communication; and
performing the downlink reception or the uplink transmission through a subband based on the received subband configuration information, wherein,
the subband configuration information comprises frequency resource configuration information and time resource configuration information,
a frequency resource of the subband configured based on the frequency resource configuration information is configured based on a common resource block (CRB), and
a time resource of the subband configured based on the time resource configuration information is configured based on at least one subband pattern having a period.

2. The method of claim 1, wherein the subband configuration information further comprises subcarrier spacing (SCS) information and cyclic prefix information.

3. The method of claim 1, wherein the frequency resource of the subband is configured based on i) upper edge, center or lower edge frequency location information and resource block (RB) number information, ii) starting RB information and RB number information, or iii) starting RB information and ending RB information.

4. The method of claim 1, wherein the frequency resource of the subband is configured based on a starting resource block (RB) and a resource indication value (RIV) from which the number of RBs is derived.

5. The method of claim 1, wherein the number of at least one subband pattern and the period of each subband pattern are based on information corresponding to time division duplex (TDD) uplink (UL)-downlink (DL) configuration common (tdd-UL-DL-ConfigurationCommon) information element.

6. The method of claim 1, wherein the time resource of the subband is configured based on duration based on the number of symbols, from a specific symbol of each subband pattern.

7. The method of claim 1, wherein the subband configuration information further comprises a subband list comprising the subband, and at least one subband included in the subband list is activated.

8. The method of claim 1, wherein the subband configuration information is received through UE-specific or cell-specific upper layer signaling.

9. The method of claim 8, wherein the subband is activated through downlink control information (DCI).

10. The method of claim 8, wherein the configuration of the subband is released through the UE-specific or cell-specific upper layer signaling.

11. The method of claim 1, wherein the subband configuration information is received through downlink control information (DCI).

12. A method for a base station to perform downlink transmission and/or uplink reception in a wireless communication system, the method comprising:
transmitting subband configuration information for full duplex communication; and
performing the downlink transmission or the uplink reception through a subband based on the transmitted subband configuration information, wherein
the subband configuration information comprises frequency resource configuration information and time resource configuration information,
a frequency resource of the subband configured based on the frequency resource configuration information is configured based on a common resource block (CRB), and
a time resource of the subband configured based on the time resource configuration information is configured based on at least one subband pattern having a period.

13. The method of claim 12, wherein the subband configuration information further comprises subcarrier spacing (SCS) information and cyclic prefix information.

14. The method of claim 12, wherein the frequency resource of the subband is configured based on i) upper edge, center or lower edge frequency location information and resource block (RB) number information, ii) starting RB information and RB number information, or iii) starting RB information and ending RB information.

15. The method of claim 12, wherein the frequency resource of the subband is configured based on a starting resource block (RB) and a resource indication value (RIV) from which the number of RBs is derived.

16. The method of claim 12, wherein the number of at least one subband pattern and the period of each subband pattern are based on information corresponding to time division duplex (TDD) uplink (UL)-downlink (DL) configuration common (tdd-UL-DL-ConfigurationCommon) information element.

17. The method of claim 12, wherein the time resource of the subband is configured based on duration based on the number of symbols, from a specific symbol of each subband pattern.

18. The method of claim 12, wherein the subband configuration information further comprises a subband list comprising the subband, and at least one subband included in the subband list is activated.

19. The method of claim 12, wherein the subband configuration information is transmitted through UE-specific or cell-specific upper layer signaling.

20. A communication apparatus in a wireless communication system, the apparatus comprising:
at least one processor; and
at least one memory configured to store instructions and be operably electrically connectable to the at least one processor, wherein operations performed based on the instructions executed by the at least one processor comprise:
receiving subband configuration information for full duplex communication; and
performing downlink reception or uplink transmission through a subband based on the received subband configuration information, wherein,
the subband configuration information comprises frequency resource configuration information and time resource configuration information,
a frequency resource of the subband configured based on the frequency resource configuration information is configured based on a common resource block (CRB), and
a time resource of the subband configured based on the time resource configuration information is configured based on at least one subband pattern having a period.
